# FASCICULE DE BREVET EUROPEEN

(11) **EP 1 744 424 B1**
(45) Date de publication et mention de la délivrance du brevet: **21.05.2008**
(21) Numéro de dépôt: 06291057.5
(22) Date de dépôt: 27.06.2006
(51) Int. Cl.: H02G 3/04

(54) **Accessoire à longueur variable pour goulotte électrique et ensemble électrique comprenant une goulotte électrique ainsi qu'un tel accessoire**
Zubehör mit variabler Länge für elektrischen Führungskanal und elektrische Anordnung mit einem elektrischen Führungskanal sowie mit einem solchen Zubehör
Accessory with variable length for electrical duct and electric assembly comprising an electrical duct as well as such an accessory

(30) Priorité: 13.07.2005 FR 0507511
(43) Date de publication de la demande: 17.01.2007
(73) Titulaire: LEGRAND FRANCE, 87000 Limoges (FR); LEGRAND SNC, 87000 Limoges (FR)
(72) Inventeur: Decore, Bertrand, 72650 La Chapelle-Saint-Aubin (FR); Gautier, Bruno, 72000 Le Mans (FR); Jadaud, Alain, 72240 Tennie (FR)
(74) Mandataire: Orsini, Fabienne

(56) Documents cités:
- WO-A-02/35670
- US-A- 4 990 722

## Description

### DOMAINE TECHNIQUE AUQUEL SE RAPPORTE L'INVENTION

La présente invention concerne, de manière générale, les goulottes électriques destinées au logement et à la protection de conducteurs électriques ainsi qu'au logement et à la protection d'un quelconque appareillage électrique desservi par ces conducteurs.

Elle concerne plus particulièrement un accessoire à rapporter transversalement dans l'ouverture longitudinale d'un socle d'une goulotte électrique, entre deux retours de celui-ci.

Ici, les retours du socle de ladite goulotte peuvent appartenir aux ailes latérales du socle ou à une cloison portée par le fond de ce dernier.

L'invention concerne également une goulotte électrique dont le socle est adapté au montage d'un tel accessoire.

L'invention trouve une application particulièrement avantageuse dans la réalisation d'une agrafe de retenue qui assure, avant la mise en place du couvercle sur le socle de la goulotte ou lors d'une dépose de celui-ci, le maintien des conducteurs électriques qui circulent dans le socle de ladite goulotte.

Toutefois, l'invention peut être également appliquée à tout type d'accessoire comme une traverse de support d'appareillage électrique.

### ARRIERE-PLAN TECHNOLOGIQUE

On connaît déjà notamment des documents FR 2 755 310 et EP 0 392 956 des agrafes de retenue pour goulotte électrique qui comportent des parties sécables permettant d'adapter leur longueur à la largeur de l'ouverture longitudinale du socle de la goulotte dans laquelle elles sont rapportées transversalement.

L'inconvénient majeur de ce type d'agrafe de retenue est que le raccourcissement de l'agrafe est irréversible dans la mesure où les parties détachées de celle-ci ne peuvent plus lui être assujetties.

On connaît également du document EP 1 359 652 une agrafe de retenue qui comporte au centre de sa platine deux parties détachables adaptées à former des agrafes de retenue de plus petites longueurs.

On connaît enfin du document WO 02/35670 une agrafe de retenue pour goulotte qui comporte deux parties, s'étendant selon un axe longitudinal, raccordées entre elles par une partie flexible.

### OBJET DE L'INVENTION

Par rapport à l'état de la technique précité, l'invention propose un nouvel accessoire à longueur variable.

Plus particulièrement, l'invention propose un accessoire selon la revendication 1.

D'autres caractéristiques non limitatives et avantageuses de l'accessoire selon l'invention sont les suivantes :
- les deux parties sont adaptées à coulisser l'une par rapport à l'autre ;
- chaque partie comprend un corps et un bras qui s'étend dans le prolongement dudit corps, ce bras étant destiné à être engagé dans le corps de l'autre partie ;
- le corps de chaque partie comporte intérieurement des moyens de glissière adaptés à guider le bras de l'autre partie en translation lors de son coulissement ;
- le corps de chaque partie comporte à son extrémité à partir de laquelle s'étend le bras, à côté dudit bras, une lumière d'introduction du bras de l'autre partie ;
- un des bords qui délimitent la lumière du corps de chaque partie est pourvu d'un détrompeur apte à guider l'introduction du bras de l'autre partie dans ladite lumière ;
- ledit détrompeur comprend une encoche destinée à recevoir à coulissement une nervure prévue sur le bras de l'autre partie ;
- ledit détrompeur comprend une saillie destinée à être reçue à coulissement dans une rainure prévue dans le bras de l'autre partie ;
- ledit corps de chaque partie comporte intérieurement un rebord contre lequel coulisse le bras de l'autre partie ;
- le bras de chaque partie comporte à son extrémité libre un système d'arrêt permettant d'éviter, lors de son coulissement, qu'il ne se désolidarise de l'autre partie ;
- ledit système d'arrêt comprend une patte rétractable adaptée à prendre appui contre le corps de l'autre partie ;
- ladite patte rétractable est montée à pivotement sur ledit bras au moyen d'une liaison souple ;
- il comprend des moyens de montage sur un retour du socle de ladite goulotte ;
- lesdits moyens de montage sont des moyens d'encliquetage ;
- il comporte à chacune de ses extrémités libres, en correspondance des moyens de montage des retours en vis-à-vis dudit socle, une première patte pourvue d'une dent d'encliquetage adaptée à s'accrocher à une nervure d'encliquetage, et des deuxième et troisième pattes qui encadrent la première et qui sont adaptées à s'insérer dans une gorge longitudinale ;
- chaque partie est formée d'une seule pièce en matière plastique ; et
- il constitue une agrafe de retenue de câbles circulant dans ledit socle ou une traverse d'un support d'appareillage électrique.

L'invention concerne également une goulotte électrique comprenant un socle dont des retours en vis-à-vis sont pourvus de moyens de montage d'un accessoire tel que précité.

Selon une caractéristique avantageuse de la goulotte conforme à l'invention, au moins un desdits retours en vis-à-vis appartient à une aile latérale du socle ou à une cloison de séparation ou de fractionnement qui s'élève à partir du fond du socle.

Selon une autre caractéristique avantageuse de la goulotte conforme à l'invention, lesdits moyens de montage sont des moyens d'encliquetage. Ils peuvent comprendre le long de chaque retour une gorge longitudinale qui s'ouvre vers l'intérieur du socle et qui est bordée sur son bord inférieur par une nervure d'encliquetage.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1A est une vue schématique en perspective de dessus d'une partie d'un accessoire selon l'invention ;
- la figure 1B est une vue schématique de dessous de ladite partie de la figure 1A;
- la figure 2A est une vue schématique de dessus d'un accessoire selon l'invention dans une première longueur ;
- la figure 2B est une vue schématique de dessous de l'accessoire de la figure 2A;
- la figure 3A est une vue schématique de dessus d'un accessoire selon l'invention dans une deuxième longueur ;
- la figure 3B est une vue schématique de dessous de l'accessoire de la figure 3A;
- les figures 4 et 5 sont des vues schématiques en perspective de deux configurations différentes d'un ensemble électrique selon l'invention ; et
- les figures 6A et 6B sont des vues schématiques en perspective d'un autre accessoire selon l'invention dans deux configurations de longueur différentes.

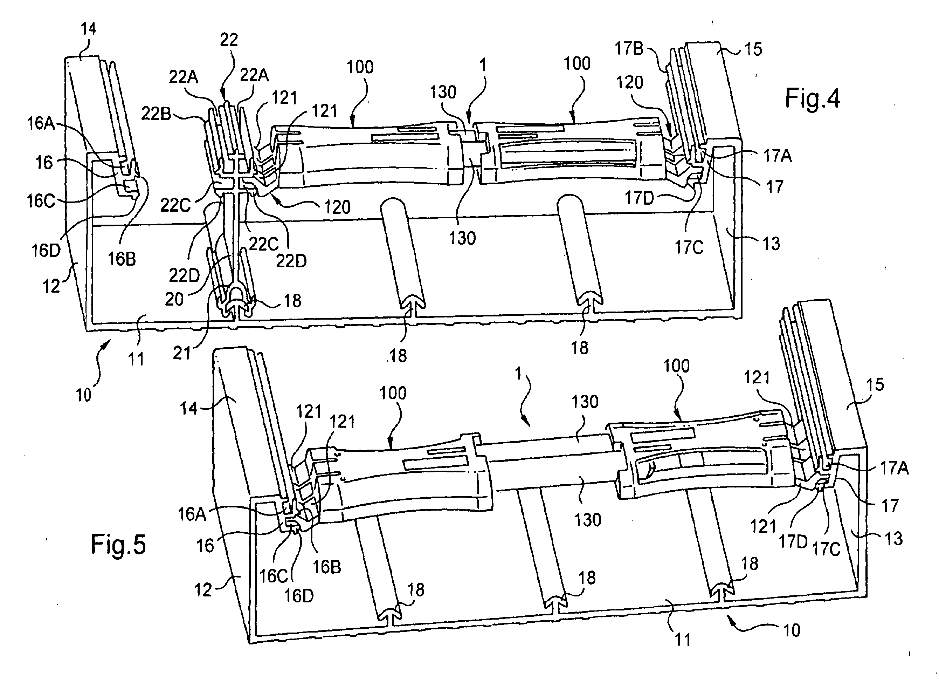

Sur les figures 4 et 5 on a représenté un socle 10 d'une goulotte électrique qui présente ici une section en U avec un fond 11 bordé sur ses deux bords longitudinaux par deux ailes latérales 12,13 parallèles qui s'élèvent perpendiculairement audit fond 11.

Chacune des ailes latérales 12,13 du socle 10 porte en tête un retour 14,15 en équerre qui s'étend vers l'intérieur du socle 10 de sorte que les deux retours 14,15 des ailes latérales 12,13 sont positionnés en vis-à-vis.

Chaque retour 14,15 comprend à son extrémité libre un bord tombant 16,17 pourvu de moyens de montage 16A,16B,17A,17B d'un couvercle de fermeture (non représenté) de l'ouverture longitudinale du socle 10.

Ici ces moyens de montage comprennent, le long dudit retour 16,17, une gorge longitudinale 16A,17A ouverte vers la face avant du socle 10 qui reçoit le couvercle de fermeture et bordée latéralement par une nervure d'encliquetage 16B,17B.

Le fond 11 du socle 10 comprend des nervures longitudinales 18, de section en forme de flèche, qui s'élèvent perpendiculairement audit fond 11. Ces nervures longitudinales 18 sont destinées au montage d'une cloison de fractionnement 20 de l'espace intérieur du socle 10 (voir figure 4) ou d'une cloison de séparation.

Comme le montre plus particulièrement la figure 4, ici la cloison de fractionnement 20 comporte un pied 21 qui s'accroche par encliquetage à la tête d'une nervure longitudinale 18 et une tête 22, située au niveau des retours 16,17 des ailes latérales 12,13, pourvue de retours dos-à-dos formant des moyens de montage d'un couvercle de fermeture. Ces moyens de montage comprennent de chaque côté de la paroi définie par ladite cloison de fractionnement 20, une gorge longitudinale 22A ouverte vers la face avant du socle 10 et bordée latéralement par une nervure d'encliquetage 22B.

Avantageusement, comme le montrent les figures 4 et 5, il est prévu un accessoire 1 rapporté transversalement dans l'ouverture longitudinale du socle 10 de la goulotte électrique.

L'accessoire 1 s'étend entre deux retours en vis-à-vis du socle 10, ces retours pouvant appartenir aux ailes latérales 12,13 du socle 10 ou à des cloisons 20 s'élevant à partir du fond 11 de ce socle 10.

Plus particulièrement, dans la configuration représentée sur la figure 4, l'accessoire 1 s'étend entre un retour 15 d'une aile latérale 13 du socle 10 et un retour de la cloison de fractionnement 20 rapportée sur le fond 11 du socle 10, alors que dans la configuration représentée sur la figure 5, l'accessoire 1 s'étend entre les retours 14,15 des ailes latérales 12,13 du socle 10.

Comme le montrent les figures 4 et 5, avantageusement, cet accessoire 1 présente une longueur variable de façon à s'adapter à différentes largeurs d'ouverture longitudinale du socle (voir figures 4 et 5).

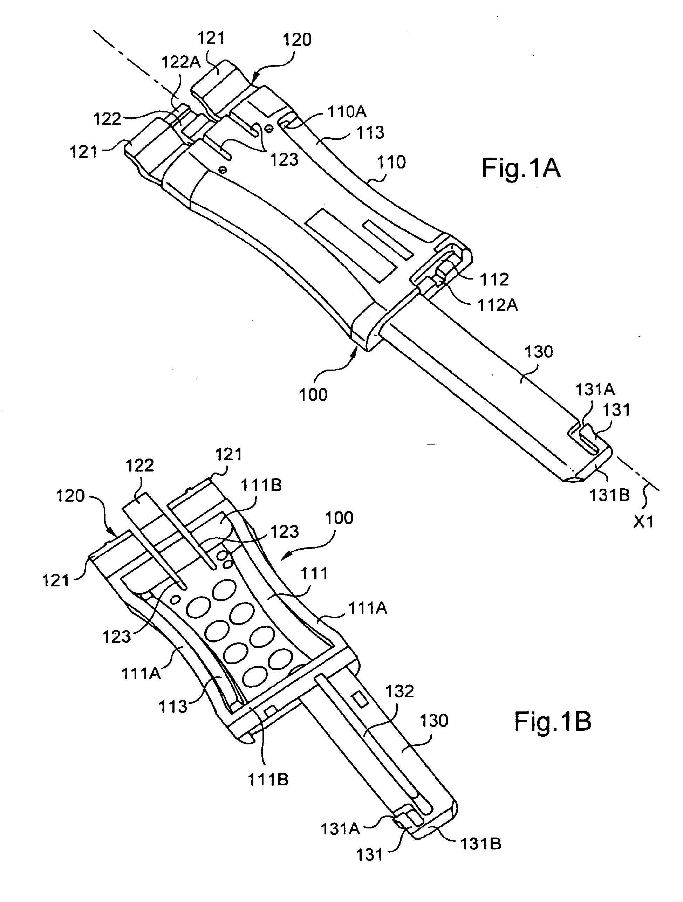

Selon l'exemple représenté sur les figures 1A, 1B, 2A, 2B, 3A, 3B, 4 et 5 cet accessoire 1 est une agrafe de retenue de câbles. Il comprend deux parties 100 s'étendant selon un axe longitudinal X1, adaptées à prendre, l'une par rapport à l'autre, différentes positions relatives suivant ledit axe longitudinal X1.

Préférentiellement, ici, les deux parties 100 de l'accessoire 1 sont agencées de manière à pouvoir coulisser l'une par rapport à l'autre.

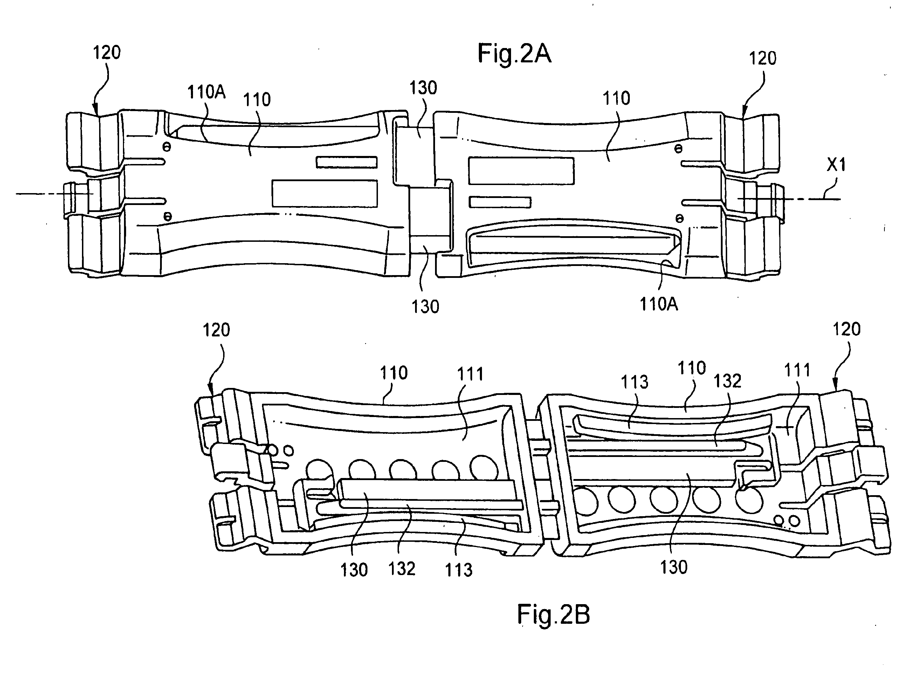

Comme le montrent les figures 2A, 2B et 4, l'accessoire 1 peut prendre une longueur minimale, en rapprochant au maximum les parties 100 l'une de l'autre, pour s'étendre sur une partie seulement de la largeur de l'ouverture longitudinale du socle 10 définie entre le retour 15 d'une aile latérale 13 du socle 10 et le retour en vis-à-vis de la cloison de fractionnement 20 rapportée sur le fond 11 du socle 10.

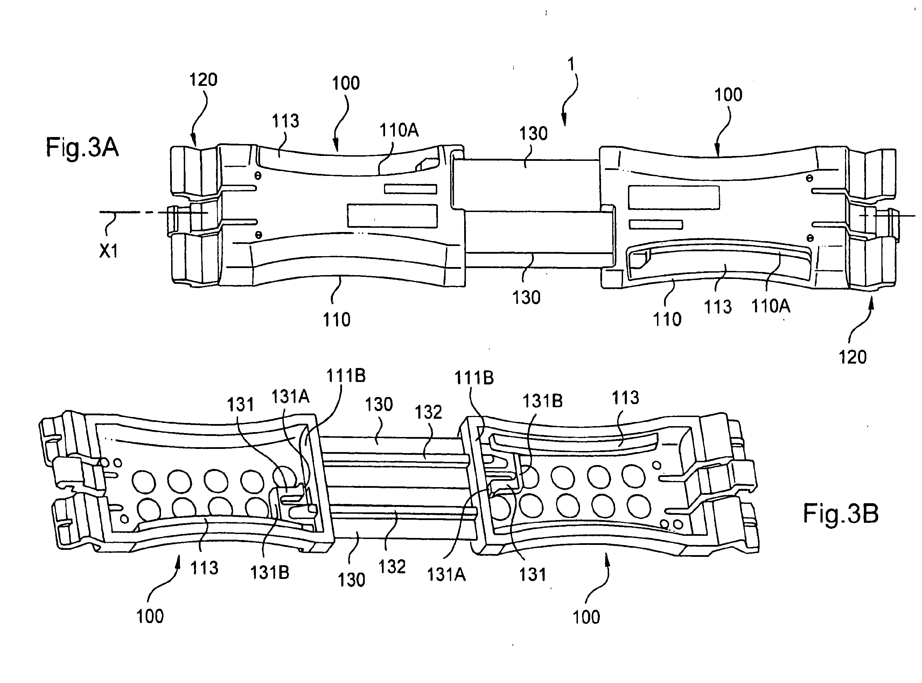

Comme le montrent les figures 3A, 3B et 5, l'accessoire 1 peut prendre une longueur maximale, en éloignant au maximum les parties 100 l'une de l'autre, pour s'étendre sur toute la largeur de l'ouverture longitudinale du socle 10 entre les deux retours 14, 15 en vis-à-vis des ailes latérales 12,13 du socle 10.

Enfin, l'accessoire 1 peut prendre une pluralité de longueurs différentes intermédiaires comprises entre les longueurs minimale et maximale représentées sur les figures 2A et 3A, en faisant coulisser les deux parties 100 l'une dans l'autre.

Comme le montrent plus particulièrement les figures 1A, 1B, ici, chaque partie 100 de l'accessoire 1 comprend un corps 110, de forme globalement rectangulaire, et un bras 130 qui s'étend à partir d'une extrémité du corps 110 dans le prolongement dudit corps 110 selon l'axe longitudinal X1.

Le bras 130 est destiné à être engagé dans le corps 110 de l'autre partie 100 de l'accessoire 1 (voir figures 2A, 2B, 3A et 3B).

À cet effet, le corps 110 de chaque partie 100 est creux sur sa face inférieure tournée vers le fond 11 du socle 10 de sorte que quatre rebords 111A, 111 B, à savoir, deux rebords longitudinaux 111A et deux rebords transversaux d'extrémité 111 B dudit corps 110 délimitent un logement 111 à l'intérieur duquel va être inséré le bras 130 de l'autre partie 100.

Le corps 110 de chaque partie 100 comporte dans le rebord transversal d'extrémité 111B à partir duquel s'étend le bras 130, à côté dudit bras 130, une lumière 112 pour l'introduction du bras 130 de l'autre partie 100 à l'intérieur du logement 111 dudit corps 110.

Cette lumière 112 présente une section égale au jeu près à la section médiane du bras 130.

Le corps 110 de chaque partie 100 comporte à l'intérieur de son logement 111 des moyens de glissière adaptés à guider le bras 130 de l'autre partie 100 en translation lors de son coulissement.

Selon l'exemple représenté sur les figures 1A à 3B, ces moyens de glissière comprennent un rebord ou trottoir 113 qui s'étend au-delà de la lumière 112 pratiquée dans le rebord transversal d'extrémité 111B du corps 110 le long du rebord longitudinal 111A et contre lequel coulisse le bras 130 de l'autre partie 100 introduit via la lumière 112 à l'intérieur du logement 111 du corps 110 de ladite partie 100.

Sur la face avant du corps 110 de chaque partie 100, il est prévu, au droit du trottoir 113, une fenêtre longitudinale 110A laissant apparaître le bras 130 de la partie 100 correspondante introduit dans le logement 111 du corps 110 de l'autre partie 100 (voir figures 2A, 3A).

Avantageusement, il est prévu dans un des bords qui délimitent la lumière 112 du corps 110 de chaque partie 100 un détrompeur apte à guider l'introduction du bras 130 de l'autre partie 100 dans ladite lumière 112.

Selon l'exemple représenté, le détrompeur comporte une encoche 112A destinée à recevoir à coulissement une nervure longitudinale 132 prévue sur la face arrière du bras 130 de la partie correspondante.

La coopération de l'encoche 112A et de la nervure longitudinale 132 constitue également un moyen de glissière apte à guider le bras 130 de la partie 100 correspondante en translation lors de son coulissement dans le corps 110 de l'autre partie 100.

Bien entendu, selon une variante non représentée, on pourrait prévoir que le détrompeur comporte une saillie destinée à être reçue à coulissement dans une nervure correspondante prévue sur la face arrière du bras de ladite partie.

Par ailleurs, le bras 130 de chaque partie 100 comporte à son extrémité libre un système d'arrêt 131 permettant d'éviter, lors de son coulissement, qu'il ne se désolidarise de l'autre partie 100.

Ici, le système d'arrêt comprend une patte 131 rétractable adaptée à prendre appui contre le corps 110 de l'autre partie 100.

Plus particulièrement, la patte 131 rétractable est montée à pivotement sur ledit bras 130 au moyen d'une liaison souple 131B formant charnière.

Ici, la patte 131 et la liaison souple 131B viennent de formation avec le bras 130.

En position stable, sortie de fabrication, la patte 131 de chaque bras 130 est déployée avec son extrémité libre 131A qui fait saille du bord longitudinal dudit bras 130 (voir figure 1A).

L'extrémité libre du bras 130 comprend un décrochement derrière ladite patte 131.

Ainsi, pour permettre le passage de l'extrémité du bras 130 d'une partie 100 au travers de la lumière 112 du corps 110 de l'autre partie 100, la patte 131 prévue à l'extrémité du bras 130 se rétracte à l'intérieur du décrochement grâce au repliement élastique de la liaison souple 131B.

Lorsque l'extrémité libre du bras 130 a dépassé la lumière 112 du corps 110 de l'autre partie 100, la patte 131 se déploie élastiquement.

Lorsque ultérieurement les deux parties 100 de l'accessoire 1 sont, par coulissement, éloignées au maximum l'une de l'autre, l'extrémité libre 131A de la patte 131 de chaque bras 130 prend appui contre la face intérieure du rebord transversal d'extrémité 111B correspondant de chaque corps 110 pour éviter la désolidarisation involontaire desdites parties 100 (voir figure 3B).

Par ailleurs, il est prévu à l'extrémité du corps 110 de chaque partie 100, opposée à celle portant le bras 130, des moyens de montage 120 sur un retour du socle 10 de la goulotte électrique.

Ces moyens de montage 120 sont préférentiellement des moyens d'encliquetage.

Plus particulièrement, ces moyens de montage 120 comprennent une première patte 122 pourvue d'une dent d'encliquetage 122A tournée vers la face avant de chaque partie 100, encadrée par une deuxième et une troisième pattes 121 de coincement.

Les deuxième et troisième pattes 121 de coincement sont séparées de la première patte 122 d'encliquetage par des encoches 123 qui permettent de donner à la première patte 122 d'encliquetage une certaine souplesse par rapport au corps 110 de la partie 100 correspondante.

En correspondance, le socle 110 comporte sur ses retours en vis-à-vis des moyens de montage de l'accessoire 1.

Bien entendu, on entend par retour du socle 10, les retours 14,15 des ailes latérales 12,13 ainsi que les retours 22 portés par la cloison de fractionnement 20 rapportée sur le fond 11 du socle 10.

Ces moyens de montage comprennent pour chaque retour, en dessous de la gorge longitudinale 16A,17A,22A prévue pour le montage du couvercle de fermeture, une gorge longitudinale 16C,17C,22C ouverte vers l'intérieur du socle 10 et bordée sur son bord inférieur par une nervure d'encliquetage 16D,17D,22D.

Chaque gorge longitudinale 16C,17C,22C s'ouvre dans une direction perpendiculairement à la gorge longitudinale 16A,17A,22A destinée à accueillir les moyens de montage du couvercle de fermeture.

Ainsi, chaque dent d'encliquetage 122A de l'accessoire 1 s'accroche à la nervure d'encliquetage 16D,17D,22D correspondante tandis que les deuxième et troisième pattes 121 de coincement qui l'encadre prennent appui dans la gorge longitudinale 16C,17C,22C du retour correspondant de façon à prendre en sandwich l'aile latérale correspondante de ladite gorge longitudinale 16C,17C,22C.

Avantageusement, chaque partie 100 de l'accessoire 1 est formée d'une seule pièce par moulage ou extrusion d'une matière plastique.

L'accessoire 1 forme avec la goulotte électrique un ensemble électrique à retenue de câbles.

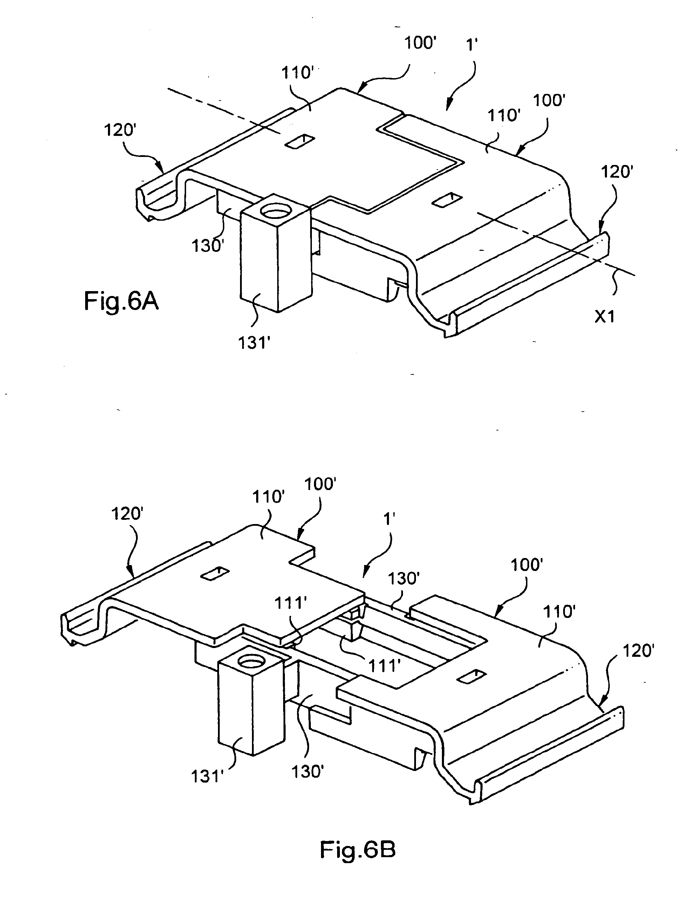

Sur les figures 6A et 6B on a représenté un autre accessoire 1' du même titre que l'accessoire 1, qui constitue une traverse d'un support d'appareillage. Cet accessoire 1' comporte également deux parties 100' adaptées à prendre, par coulissement, différentes positions relatives l'une par rapport à l'autre selon l'axe longitudinal X1 de l'accessoire 1'.

Ici aussi chaque partie 100' de l'accessoire 1', réalisée d'une seule pièce en matière plastique, comporte un corps 110' et un bras 130' destiné à coulisser dans une glissière 111' prévue sur la face inférieure du corps 110' de l'autre partie 100'.

À l'opposé du bras 130', le corps 110' de chaque partie 100' de l'accessoire 1' comporte des moyens d'accrochage 120' par encliquetage à un retour d'un socle d'une goulotte électrique.

En outre, comme le montrent les figures 6A, 6B, un des bras 130' d'une des parties 100' de l'accessoire 1' porte sur une face latérale tournée vers l'extérieur de l'accessoire 1' un plot 131' pourvu d'un puits pour la fixation par vis d'un socle d'un mécanisme d'appareillage.

La présente invention n'est nullement limitée aux modes de réalisation décrits et représentés, mais l'homme du métier saura y apporter toute variante conforme à son esprit.

## Revendications

1. Accessoire (1 ;1') à rapporter transversalement dans l'ouverture longitudinale d'un socle (10) d'une goulotte électrique, entre deux retours (14,15,22) de celui-ci, comprenant deux parties (100 ;100') s'étendant selon un axe longitudinal (X1), **caractérisé en ce que** lesdites parties (100 ;100') sont adaptées à prendre, l'une par rapport à l'autre, différentes positions relatives suivant ledit axe longitudinal (X1).

2. Accessoire selon la revendication 1, **caractérisé en ce que** les deux parties (100 ;100') sont adaptées à coulisser l'une par rapport à l'autre.

3. Accessoire selon l'une des revendications 1 et 2, **caractérisé en ce que** chaque partie (100 ;100') comprend un corps (110 ;110') et un bras (130 ;130') qui s'étend dans le prolongement dudit corps, ce bras (130 ;130') étant destiné à être engagé dans le corps (110 ;110') de l'autre partie (100 ;100').

4. Accessoire selon la revendication 3, **caractérisé en ce que** le corps de chaque partie (100 ;100') comporte intérieurement des moyens de glissière (113 ;111') adaptés à guider le bras (130 ;130') de l'autre partie en translation lors de son coulissement.

5. Accessoire selon l'une des revendications 3 et 4, **caractérisé en ce que** le corps (110) de chaque partie (100) comporte à son extrémité à partir de laquelle s'étend le bras (130), à côté dudit bras, une lumière (112) d'introduction du bras de l'autre partie.

6. Accessoire selon la revendication 5, **caractérisé en ce qu'**un des bords qui délimitent la lumière (112) du corps de chaque partie est pourvu d'un détrompeur (112A) apte à guider l'introduction du bras (130) de l'autre partie (100) dans ladite lumière (112).

7. Accessoire selon la revendication 6, **caractérisé en ce que** ledit détrompeur comprend une encoche (112A) destinée à recevoir à coulissement une nervure (132) prévue sur le bras (130) de l'autre partie (100).

8. Accessoire selon la revendication 6, **caractérisé en ce que** ledit détrompeur comprend une saillie destinée à être reçue à coulissement dans une rainure prévue dans le bras de l'autre partie.

9. Accessoire selon l'une des revendications 3 à 8, **caractérisé en ce que** ledit corps (110) de chaque partie comporte intérieurement un rebord (113) contre lequel coulisse le bras (130) de l'autre partie.

10. Accessoire selon l'une des revendications 3 à 9, **caractérisé en ce** le bras (130) de chaque partie comporte à son extrémité libre un système d'arrêt (131) permettant d'éviter, lors de son coulissement, qu'il ne se désolidarise de l'autre partie.

11. Accessoire selon la revendication 10, **caractérisé en ce que** ledit système d'arrêt comprend une patte (131) rétractable adaptée à prendre appui contre le corps (110) de l'autre partie (100).

12. Accessoire selon la revendication 11, **caractérisé en ce que** ladite patte (131) rétractable est montée à pivotement sur ledit bras (130) au moyen d'une liaison souple (131B).

13. Accessoire selon l'une des revendications 1 à 12, **caractérisé en ce qu'**il comprend des moyens de montage (120) sur un retour du socle de ladite goulotte.

14. Accessoire selon la revendication 13, **caractérisé en ce que** lesdits moyens de montage sont des moyens d'encliquetage (120).

15. Accessoire selon l'une des revendications 13 et 14, **caractérisé en ce qu'**il comporte à chacune de ses extrémités libres, en correspondance des moyens de montage des retours en vis-à-vis dudit socle, une première patte (122) pourvue d'une dent d'encliquetage (122A) adaptée à s'accrocher à une nervure d'encliquetage (16D,17D,22D), et des deuxième et troisième pattes (121) qui encadrent la première et qui sont adaptées à s'insérer dans une gorge longitudinale (16C,17C,22C).

16. Accessoire selon l'une des revendications précédentes, **caractérisé en ce que** chaque partie est formée d'une seule pièce en matière plastique.

17. Accessoire selon l'une des revendications précédentes, **caractérisé en ce qu'**il constitue une agrafe (1) de retenue de câbles circulant dans ledit socle.

18. Accessoire selon l'une des revendications 1 à 16, **caractérisé en qu'**il constitue une traverse (1') d'un support d'appareillage électrique.

19. Goulotte électrique comprenant un socle (10) dont des retours (14,15,22) en vis-à-vis sont pourvus de moyens de montage d'un accessoire (1 ;1') selon l'une des revendications 1 à 18.

20. Goulotte selon la revendication 19, **caractérisée en ce qu'**au moins un desdits retours en vis-à-vis appartient à une aile latérale (12,13) du socle (10).

21. Goulotte selon l'une des revendications 19 ou 20, **caractérisée en ce qu'**au moins un desdits retours en vis-à-vis appartient à une cloison de fractionnement (20) ou de séparation qui s'élève à partir du fond (11) du socle (10).

22. Goulotte selon l'une des revendications 19 à 21, **caractérisée en ce que** lesdits moyens de montage sont des moyens d'encliquetage.

23. Goulotte selon l'une des revendications 19 à 22, **caractérisée en ce que** lesdits moyens de montage comprennent le long de chaque retour une gorge longitudinale (16C,17C,22C) qui s'ouvre vers l'intérieur du socle et qui est bordée sur son bord inférieur par une nervure d'encliquetage (16D,17D,22D).

## Claims

1. An accessory (1; 1') for fitting across the longitudinal opening of a cable trough base (10) between two fold-overs (14, 15, 22) thereof, the accessory comprising two portions (100; 100') extending along a longitudinal axis (X1) and being **characterized in that** said portions (100; 100') are adapted to take up different positions relative to each other along said longitudinal axis (X1).

2. An accessory according to claim 1, **characterized in that** the two portions (100; 100') are adapted to slide relative to each other.

3. An accessory according to claim 1 or claim 2, **characterized in that** each portion (100; 100') comprises a body (110; 110') and an arm (130; 130') extending in line with said body, the arm (130; 130') being designed to be engaged in the body (110; 110') of the other portion (100; 100').

4. An accessory according to claim 3, **characterized in that** the body of each portion (100; 100') includes internal slideway means (113; 111') adapted to guide the arm (130; 130') of the other portion in translation while it slides.

5. An accessory according to claim 3 or claim 4, **characterized in that** the body (110) of each portion (100) includes, at its end from which the arm (130) extends and beside said arm, a slot (112) for inserting the arm of the other portion.

6. An accessory according to claim 5, **characterized in that** one of edges defining the slot (112) in the body of each portion is provided with keying means (112A) suitable for guiding the insertion of the arm (130) of the other portion (100) into said slot (112).

7. An accessory according to claim 6, **characterized in that** said keying means comprise a notch (112A) designed to receive slidably a spline (132) provided on the arm (130) of the other portion (100).

8. An accessory according to claim 6, **characterized in that** said keying means comprises a projection designed to be received slidably in a groove formed in the arm of the other portion.

9. An accessory according to any one of claims 3 to 8, **characterized in that** said body (110) of each portion includes an internal rim (113) against which the arm (130) of the other portion slides.

10. An accessory according to any one of claims 3 to 9, **characterized in that** the arm (130) of each portion includes, at its free end, a stop system (131) serving during sliding to prevent the arm from separating from the other portion.

11. An accessory according to claim 10, **characterized in that** stop system comprises a retractable tab (131) adapted to bear against the body (110) of the other portion (100).

12. An accessory according to claim 11, **characterized in that** said retractable tab (131) is pivotally mounted on said arm (130) by means of a flexible connection (131B).

13. An accessory according to any one of claims 1 to 12, **characterized in that** it includes mounting means (120) for mounting on a fold-over of the base of said trough.

14. An accessory according to claim 13, **characterized in that** said mounting means are snap-fastener means (120).

15. An accessory according to claim 13 or claim 14, **characterized in that** it includes, at each of its ends, in correspondence with the mounting means of the facing fold-overs of said base: a first tab (122) provided with a snap-fastening tooth (122A) adapted to catch a snap-fastening rim (16D, 17D, 22D); and second and third tabs (121) on either side of the first and adapted to be inserted in a longitudinal groove (16C, 17C, 22C).

16. An accessory according to any preceding claim, **characterized in that** each portion is made as a single piece of plastics material.

17. An accessory according to any preceding claim, **characterized in that** it constitutes a clip (1) for retaining cables extending in said base.

18. An accessory according to any one of claims 1 to 16, **characterized in that** it constitutes a crossbar (1') for supporting electrical equipment.

19. A cable trough comprising a base (10) having facing fold-overs (14, 15, 22) provided with mounting means for mounting an accessory (1; 1') according to any one of claims 1 to 18.

20. A trough according to claim 19, **characterized in that** at least one of said facing fold-overs belongs to a side flange (12, 13) of the base (10).

21. A trough according to claim 19 or claim 20, **characterized in that** at least one of said facing fold-overs belongs to a subdivider or separator partition (20) projecting from the bottom web of the base (10).

22. A trough according to any one of claims 19 to 21, **characterized in that** said mounting means are snap-fastener means.

23. A trough according to any one of claims 19 to 22, **characterized in that** said mounting means include, along each fold-over, a longitudinal groove (16C, 17C, 22C) that is open towards the inside of the base and that is bordered along its bottom edge by a snap-fastener rim (16D, 17D, 22D).

## Patentansprüche

1. Zubehör (1; 1') zum Anfügen in Querrichtung in der Längsöffnung einer Basis (10) eines elektrischen Führungskanals zwischen zwei von dessen Umbiegungen (14, 15, 22), mit zwei Teilen (100; 100'), die sich entlang einer Längsachse (X1) erstrecken, **dadurch gekennzeichnet, dass** die Teile (100; 100') geeignet sind, unterschiedliche Positionen zueinander in Bezug auf die Längsachse (X1) einzunehmen.

2. Zubehör nach Anspruch 1, **dadurch gekennzeichnet, dass** die beiden Teile (100; 100') geeignet sind, bezüglich einander zu gleiten.

3. Zubehör nach Anspruch 1 oder 2, **dadurch gekennzeichnet, dass** jeder Teil (100; 100') einen Körper (110; 110') und einen Arm (130; 130') umfasst, der sich in der Verlängerung des Körpers erstreckt und dazu bestimmt ist, im Körper (110; 110') des anderen Teils (100; 100') in Eingriff zu kommen.

4. Zubehör nach Anspruch 3, **dadurch gekennzeichnet, dass** der Körper jedes Teils (100; 100') innen Führungsschienenmittel (113; 111') aufweist, die geeignet sind, den Arm (130; 130') des anderen Teils während seines Gleitens translatorisch zu führen.

5. Zubehör nach Anspruch 3 oder 4, **dadurch gekennzeichnet, dass** der Körper (110) jedes Teils (100) an seinem Ende, von dem aus sich der Arm (130) erstreckt, neben dem Arm eine Öffnung (112) zur Einführung des Arms des anderen Teils aufweist.

6. Zubehör nach Anspruch 5, **dadurch gekennzeichnet, dass** einer der Ränder, die die Öffnung (112) des Körpers jedes Teils begrenzen, mit einer Unverwechselbarkeitseinrichtung (112A) versehen ist, die geeignet ist, das Einführen des Arms (130) des anderen Teils (100) in die Öffnung (112) zu führen.

7. Zubehör nach Anspruch 6, **dadurch gekennzeichnet, dass** die Unverwechselbarkeitseinrichtung eine Raste (112A) umfasst, die dazu bestimmt ist, eine am Arm (130) des anderen Teils (100) vorgesehene Rippe (132) gleitend aufzunehmen.

8. Zubehör nach Anspruch 6, **dadurch gekennzeichnet, dass** die Unverwechselbarkeitseinrichtung einen Vorsprung umfasst, der dazu bestimmt ist, in einer im Arm des anderen Teils vorgesehenen Nut gleitend aufgenommen zu werden.

9. Zubehör nach einem der Ansprüche 3 bis 8, **dadurch gekennzeichnet, dass** der Körper (110) jedes Teils innen eine Kante (113) aufweist, an der der Arm (130) des anderen Teils gleitet.

10. Zubehör nach einem der Ansprüche 3 bis 9, **dadurch gekennzeichnet, dass** der Arm (130) jedes Teils an seinem freien Ende ein Anschlagsystem (131) aufweist, dank dessen verhindert werden kann, dass er sich während seines Gleitens vom anderen Teil löst.

11. Zubehör nach Anspruch 10, **dadurch gekennzeichnet, dass** das Anschlagsystem eine einziehbare Lasche (131) aufweist, die geeignet ist, sich am Körper (110) des anderen Teils (100) abzustützen.

12. Zubehör nach Anspruch 11, **dadurch gekennzeichnet, dass** die einziehbare Lasche (131) mittels einer flexiblen Verbindung (131B) schwenkbar am Arm (130) montiert ist.

13. Zubehör nach einem der Ansprüche 1 bis 12, **dadurch gekennzeichnet, dass** es Mittel (120) zur Montage an einer Umbiegung der Basis des Führungskanals aufweist.

14. Zubehör nach Anspruch 13, **dadurch gekennzeichnet, dass** es sich bei den Montagemitteln um Einrastmittel (120) handelt.

15. Zubehör nach Anspruch 13 oder 14, **dadurch gekennzeichnet, dass** es an jedem seiner freien Enden entsprechend den Montagemitteln der gegenüberliegenden Umbiegungen der Basis eine erste Lasche (122), die mit einem Einrastzahn (122A) versehen ist, der geeignet ist, sich in eine Einrastrippe (16D, 17D, 22D) einzuhängen, und eine zweite und eine dritte Lasche (121) aufweist, die die erste umgeben und geeignet sind, in eine Längskehle (16C, 17C, 22C) eingefügt zu werden.

16. Zubehör nach einem der vorhergehenden Ansprüche, **dadurch gekennzeichnet, dass** jedes Teil aus einem einzigen Stück Kunststoff gebildet ist.

17. Zubehör nach einem der vorhergehenden Ansprüche, **dadurch gekennzeichnet, dass** es eine Schelle (1) zum Halten von in der Basis umlaufenden Kabeln darstellt.

18. Zubehör nach einem der Ansprüche 1 bis 16, **dadurch gekennzeichnet, dass** es einen Quersteg (1') einer Stütze eines elektrischen Geräts darstellt.

19. Elektrischer Führungskanal mit einer Basis (10), dessen gegenüberliegende Umbiegungen (14, 15, 22) mit Mitteln zur Montage eines Zubehörs (1; 1') nach einem der Ansprüche 1 bis 18 versehen sind.

20. Führungskanal nach Anspruch 19, **dadurch gekennzeichnet, dass** mindestens eine der gegenüberliegenden Umbiegungen zu einem Seitenflügel (12, 13) der Basis (10) gehört.

21. Führungskanal nach Anspruch 19 oder 20, **dadurch gekennzeichnet, dass** mindestens eine der gegenüberliegenden Umbiegungen zu einer Abteilwand (20) oder Trennwand gehört, die sich vom Boden (11) der Basis (10) erhebt.

22. Führungskanal nach einem der Ansprüche 19 bis 21, **dadurch gekennzeichnet, dass** es sich bei den Montagemitteln um Einrastmittel handelt.

23. Führungskanal nach einem der Ansprüche 19 bis 22, **dadurch gekennzeichnet, dass** die Montagemittel entlang jeder Umbiegung eine Längskehle (16C, 17C, 22C) aufweisen, die zum Inneren der Basis hin offen ist und an ihrem unteren Rand durch eine Einrastrippe (16D, 17D, 22D) begrenzt ist.
